# EUROPÄISCHE PATENTANMELDUNG

(11) **EP 2 703 720 A2**
(43) Veröffentlichungstag der Anmeldung: **05.03.2014**
(21) Anmeldenummer: 13181667.0
(22) Anmeldetag: 26.08.2013
(51) Int. Cl.: F23R 3/14, F23R 3/16, F23R 3/26, F23R 3/34, F23R 3/28, F23N 3/00

(54) **Verfahren zum Betrieb eines Magervormischbrenners einer Fluggasturbine sowie Vorrichtung zur Durchführung des Verfahrens**

(30) Priorität: 28.08.2012 DE 102012017065
(71) Anmelder: Rolls-Royce Deutschland Ltd & Co KG, 15827 Blankenfelde-Mahlow (DE)
(72) Erfinder: Bagchi, Imon Kalyan, 10963 Berlin (DE); Lazik, Waldemar, 14513 Teltow (DE)
(74) Vertreter: Hoefer & Partner

(57) **Zusammenfassung**

Die Erfindung bezieht sich auf ein Verfahren zum Betrieb eines Magervormischbrenners einer Fluggasturbine, bei weichem Kraftstoff und Primärstützluft mittels eines zentrisch zur Brennerachse angeordneten Stützbrenners (42) zugeführt wird, bei welchem, den Stützbrenner (42) umgebend, Sekundärluft (51, 52, 53) zugeleitet wird und bei welchem mittels eines Hauptbrenners Kraftstoff und Luft zugeführt wird, dadurch gekennzeichnet, dass die Primärstützluft in einer Menge von 5 Vol.-% bis 10 Vol.-% der Gesamtluftmenge zugeführt wird, dass die Sekundärstützluft in einer Menge von 5 Vol.-% bis 20 Vol.-% zugeführt wird und dass über den Hauptbrenner im Teillastbereich und im Volllastbereich 35 Vol.-% bis 75 Vol.-% der Gesamtluftmenge zugeführt wird.

## Beschreibung

Die Erfindung bezieht sich auf ein Verfahren zum Betrieb eines Magervormischbrenners einer Fluggasturbine, bei welchem Kraftstoff und Primärstützluft mittels eines zentrisch zur Brennerachse angeordneten Stützbrenners zugeführt wird und wobei mittels eines Hauptbrenners Kraftstoff und Luft zugeleitet wird.

Es ist aus dem Stand der Technik bekannt, bei Magervormischbrennern zwei Brennstoffzerstäuber zu verwenden, nämlich einen Stützbrenner und einen Hauptbrenner. Der Stützbrenner ist zentrisch in dem Hauptbrenner angeordnet. Der Stützbrenner ist dabei üblicherweise als Druckdrallzerstäuber ausgebildet. Der Magervormischbrenner umfasst dabei zwei Brennstoffleitungen, um den Stützbrenner und den Hauptbrenner zu versorgen. Im Betrieb wird der Stützbrenner zum Zünden des Fluggasturbinentriebwerks und bei niedrigen Lastbedingungen verwendet, während der Hauptbrenner bei Teillast in Betrieb genommen wird und bis zur Maximallast im Einsatz ist. Der Stützbrenner ist dabei für den Zündvorgang sowie für eine stabile Verbrennung während der Startphase des Triebwerks ausgebildet.

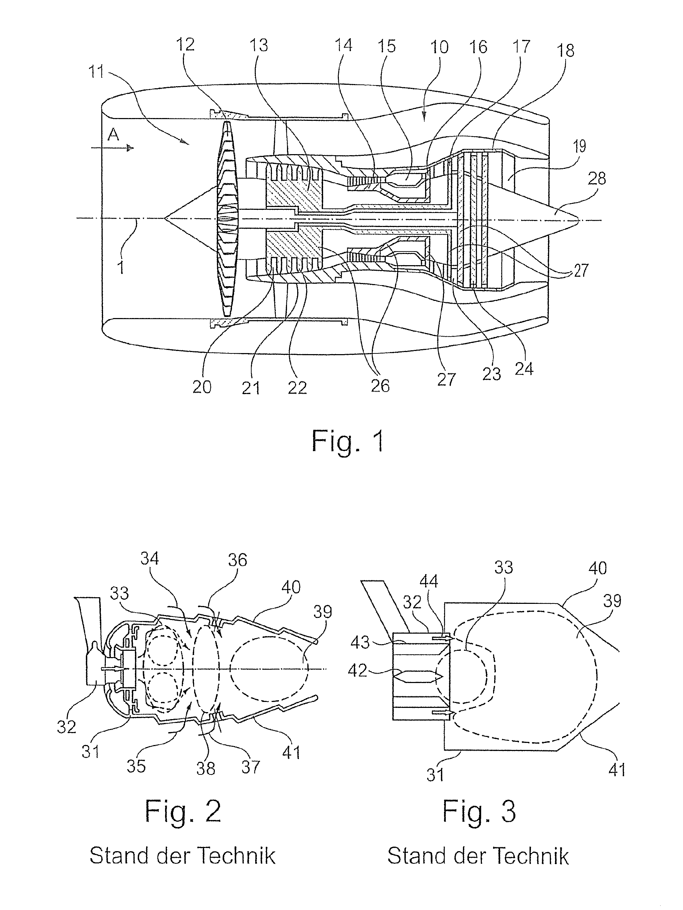

Der Stand der Technik wird nachfolgend anhand von Fig. 2 beschrieben. Diese zeigt einen an einem Brennkammerkopf 31 angeordneten Brenner 32, welcher der Brennkammer Brennstoff sowie annäherungsweise 10 Vol.-% bis 20 Vol.-% der Gesamtluft zuführt. (Eigentlich spricht man immer von Massen %, aber in diesem Fall sind diese gleich, weil die Luft eine konstante Temperatur hat.) Hierdurch bildet sich eine reiche Zone 33 aus, welche unmittelbar stromab des Brenners 32 angeordnet ist. Weitere 30 Vol.-% bis 40 Vol.-% an Luft werden durch Mischluftöffnungen 34 bis 37 zugeführt. Dies resultiert in einer Luftzumischung zu der reichen Flamme in der Flammenzone 38. Stromab dieser Flammenzone 38 ist eine magere Zone 39 ausgebildet. Die restliche Luft von 40 Vol.-% bis 50 Vol.-% wird zum Kühlen verwendet und strömt durch eine innere Brennkammerwand 40 und eine äußere Brennkammerwand 41, welche die Flamme halten. Die Fig. 2 zeigt somit einen üblichen Brenner mit einer reichen Zone, die der Luft zugeführt wird und der eine magere Zone folgt.

Die Fig. 3 zeigt eine Ausgestaltung nach dem Stand der Technik. Der Brenner 32 umfasst dabei Mittel zum Mischen von Luft und Brennstoff. Dabei kann auf eine direkte weitere oder Flammenzone 38 verzichtet werden, welche in Fig. 2 dargestellt wurde. Der gesamte Brenner (Stützbrenner und Hauptbrenner) führt dabei 50 Vol.-% bis 80 Vol.-% der Gesamtluft in die Brennkammer. Die restliche Luftmenge von 20 Vol.-% bis 50 Vol.-% wird zum Kühlen verwendet. Der Brenner umfasst zwei Brennstoffkreisläufe und ermöglicht somit die Zuführung von Brennstoff durch zwei konzentrische Brennstoffzerstäuber. Der Stützbrenner 42 mit dem zugehörigen Zerstäuber führt 5 Vol.-% bis 15 Vol.-% der Gesamtluft zu und erzeugt eine kleine reiche Zone 33, welche für den Start des Triebwerks sowie die Flammenstabilität genutzt wird. Der konzentrische Haupt-Brennstoffzerstäuber 43 führt Brennstoff von mittleren bis maximalen Lastbedingungen sowie 40 Vol.-% bis 75 Vol.-% der Gesamtluft 44 zu. Dies erzeugt eine magere Zone 39, welche die reiche Zone 33 umgibt. Diese magere Zone 39 ist verantwortlich für geringe Schadstoffemissionen, insbesondere NOₓ.

Der Hauptnachteil der in Fig. 2 gezeigten Lösung besteht darin, dass sich hohe Schadstoffemissionen, insbesondere NOₓ, ergeben und dass bei großen Lastbedingungen Ruß ausgebracht wird, da sich die Verbrennungsbedingungen einem stöchiometrischen oder reichen Verbrennungszustand annähern. Deshalb wurde bei der in Fig. 3 beschriebenen Lösung versucht, durch ein Magerbrenner-Konzept den Verbrennungsvorgang zu optimieren. Dabei ergibt sich jedoch der Nachteil, dass der Stützbrenner (Pilotbrenner) eine reduzierte Flammenstabilität bei niedriger Leistung der Fluggasturbine aufweist. Bei mittleren Lastbedingungen erfolgt die Verbrennung des Hauptbrenners zu mager, um effektiv zu arbeiten. Dies führt zu einem erhöhten Brennstoffverbrauch eines Flugzeugs. Zusätzlich ergibt sich wegen der fehlenden starken Luftzumischung eine geringe Oxidation von Ruß, so dass erhebliche Rußmengen aus der Fluggasturbine bei Mittellast ausgestoßen werden.

Der Erfindung liegt die Aufgabe zugrunde, ein Verfahren sowie eine Vorrichtung zur Durchführung des Verfahrens zum Betrieb eines Magervormischbrenners zu schaffen, welche die Nachteile des Standes der Technik vermeiden und insbesondere eine gute, stabile und schadstoffarme Verbrennung ermöglichen.

Erfindungsgemäß wird die Aufgabe durch die Merkmalskombinationen der unabhängigen Ansprüche gelöst, die Unteransprüche zeigen weitere vorteilhafte Ausgestaltungen der Erfindung.

Erfindungsgemäß ist somit vorgesehen, dass zwischen der reichen Zone und der mageren Zone eine Zwischenzumischzone mit einer starken strahlartigen Zumischung von Luft ausgebildet wird, in welche eine zusätzliche Brennstoff-Luft-Strömung eingeleitet wird. Hierdurch erfolgt auch in Teillastbereichen eine optimierte Verbrennung. Dies bringt den Vorteil mit sich, dass die Rußemissionen durch eine verbesserte Oxidation des Rußes reduziert werden. Weiterhin erfolgt eine verbesserte Verbrennung mit einem besseren Wirkungsgrad, da die aus dem Stand der Technik bekannten sehr mageren Zonen vermieden werden. Durch die Zwischenzumischzone wird eine Verbrennungszone geschaffen, welche näher an stöchiometrischen Brennstoff-Luft-Verhältnissen liegt. Diese Zone ist zwar noch mager, vermeidet jedoch die Nachteile einer zu mageren Verbrennungszone.

Erfindungsgemäß ergibt sich somit eine Anreicherung der reichen Zone durch einen geringeren Luftanteil durch den Stützbrenner. Stattdessen wird die zusätzliche Luft in die Zwischenzumischzone eingebracht. Dies führt zu einer guten Flammenstabilität und einer guten Zündbarkeit der Fluggasturbine.

Im Folgenden wird die Erfindung anhand von Ausführungsbeispielen in Verbindung mit der Zeichnung beschrieben. Dabei zeigt:
- Fig. 1: zeigt eine schematische Darstellung eines Gasturbinentriebwerks gemäß der vorliegenden Erfindung,
- Fig. 2: eine Längs-Schnittansicht einer Brennkammer gemäß dem Stand der Technik,
- Fig. 3: eine schematische Darstellung einer weiteren Variante einer Brennkammer gemäß dem Stand der Technik analog Fig. 2,
- Fig. 4: eine vereinfachte Längs-Schnittansicht einer Brennkammer gemäß einem ersten Ausführungsbeispiel der Erfindung analog der Darstellung der Fig. 3,
- Fig. 5: eine Darstellung eines weiteren Ausführungsbeispiels, analog Fig. 4,
- Fig. 6: eine Schnittansicht eines weiteren Ausführungsbeispiels, analog den Fig. 4 und 5,
- Fig. 7: eine vergrößerte Teil-Darstellung der Strömungsverhältnisse der erfindungsgemäßen Lösung gemäß Fig. 6,
- Fig. 8 bis 11: Schnitt-, Front- und Perspektiv-Ansichten unterschiedlicher Ausführungsbeispiele von Flammenstabilisatoren und Sekundärluftausnehmungen,
- Fig. 12: eine graphische Darstellung des Äquivalenzverhältnisses gegenüber dem Schub gemäß dem Stand der Technik,
- Fig. 13: eine graphische Darstellung, analog Fig. 12, eines Magervormischbrenners, und
- Fig. 14: eine Darstellung, analog den Fig. 12 und 13, der erfindungsgemäßen Lösung.

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

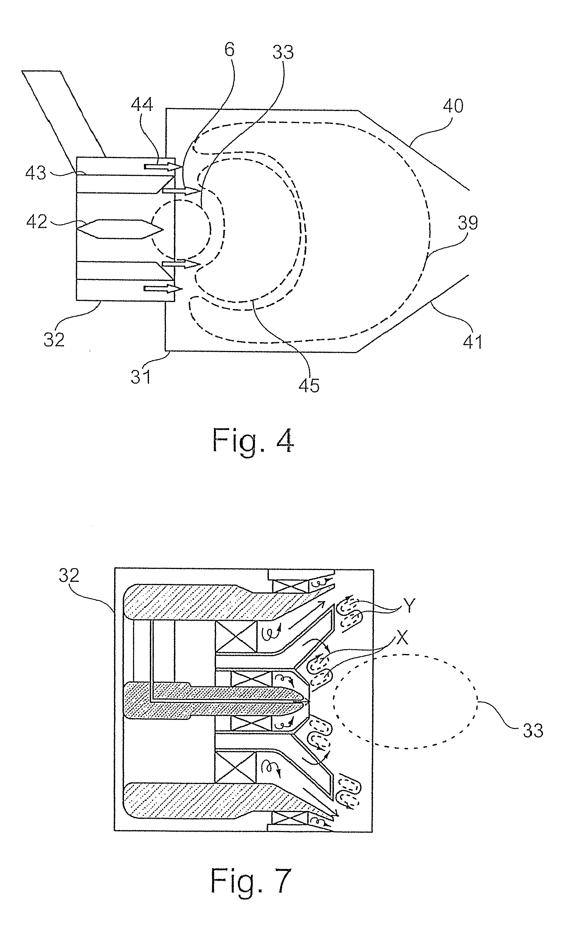

Die Fig. 4 zeigt in schematischer Darstellung eine Längs-Schnittansicht eines erfindungsgemäßen Brenners. Dieser umfasst einen Stützbrenner 42 sowie einen diesen umgebenden Brennstoffzerstäuber 43, welche Teil eines Brenners 32 sind, der an einem Brennkammerkopf 31 gelagert ist. Die Brennkammer umfasst eine innere Brennkammerwand 40 und eine äußere Brennkammerwand 41. Durch den Stützbrenner 42 wird Luft und Kraftstoff zur Ausbildung einer reichen Zone 33 zugeführt, welche sich unmittelbar an den Stützbrenner 42 anschließt. Insgesamt wird durch den Brenner eine Luftmenge von ca. 50 Vol.-% bis 80 Vol.-% der Gesamtluft der Brennkammer zugeführt. Der Brennstoff wird durch zwei konzentrische Zerstäuber zugeführt. Durch den Zerstäuber des Stützbrenners 42 wird nur eine geringe Menge an Luft (5 Vol.-% bis 10 Vol.-% der gesamten Brennkammerluft) zugeführt, wodurch sichergestellt wird, dass die reiche Zone 33 ausgebildet wird.

Die reiche Zone 33 wird von einer Zwischenzumischzone 45 begrenzt und teilweise umschlossen. In die Zwischenzone wird eine Luftmenge von 5 Vol.-% bis 20 Vol.-% der gesamten Verbrennungsluft der Brennkammer eingeführt, um eine zweite Zone oder Sekundärstützzone (Zwischenzumischzone) 45 auszubilden, welche eine weitere Zumischzone bildet (quenching zone).

Der Haupt-Brennstoffzerstäuber 43 führt Brennstoff und Luft zu. Die Luftzuführmenge beträgt 35 Vol.-% bis 75 Vol.-% der gesamten Brennkammerluft, Der Haupt-Brennstoffzerstäuber 43 wird während mittlerer bis maximaler Lastzustände der Fluggasturbine eingesetzt. Durch die Zuführung der Luft und Brennstoffs durch den Haupt-Brennstoffzerstäuber 43 wird eine magere Zone 39 ausgebildet, welche die Zwischenzumischzone 45 umschließt und sich dieser in Axialrichtung (Strömungsrichtung) anschließt.

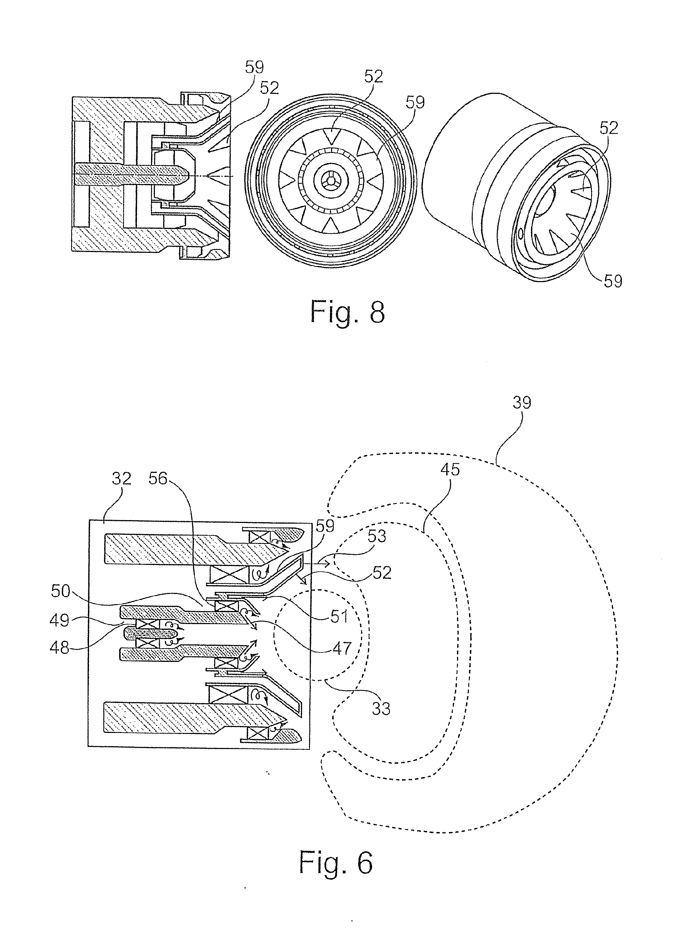

Die Fig. 6 zeigt eine detailliertere Darstellung eines weiteren Ausführungsbeispiels der Erfindung, analog der Darstellung der Fig. 4. Gleiche Teile sind mit gleichen Bezugsziffern versehen, so wie dies auch bei den nachfolgenden Ausführungsbeispielen der Fall ist.

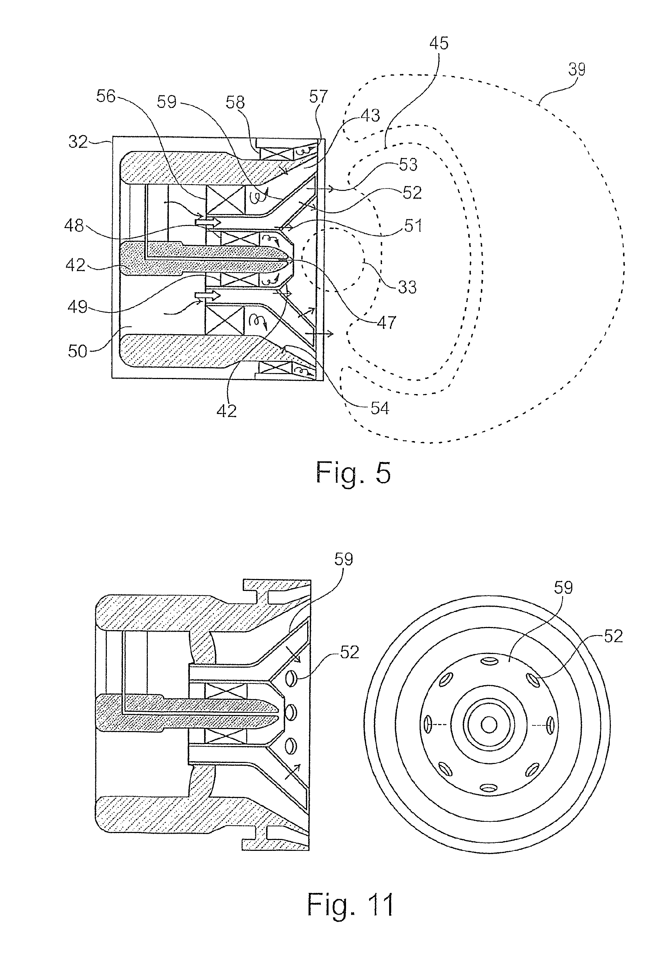

Die Fig. 5 zeigt im Einzelnen den Stützbrenner 42 mit einem Brennstoffauslass 47. Der Stützbrenner wird konzentrisch von einem ringförmigen Luftdurchlass 48, in welchem ein Drallelement 49 angeordnet ist, umgeben. Das ausströmende Luft-BrennstoffGemisch erzeugt die reiche Zone 33.

Die Zwischenzumischzone 45 wird durch weitere Zuführung von Luft und Brennstoff ausgebildet. Hierfür ist ein konzentrischer Ringkanal 50 vorgesehen. Die Ausgestaltung ermöglicht einen größeren Druckabfall, um höhere Luftgeschwindigkeiten an der Stelle zu erzeugen, an welcher Luft in die Brennkammer eingeleitet wird. Dies resultiert in einer guten Vermischung mit der reichen Zone 33. Die Sekundärluftzuführung 51, 52 und 53 kann durch geeignete Ausnehmungen erfolgen, welche nachfolgend im Zusammenhang mit den Fig. 8 bis 10 beschrieben werden.

Der Haupt-Brennstoff wird durch eine konzentrische Hauptluftzufuhr 54 zugeführt und durch die innere Luftzufuhr 55 atomisiert und mit dieser gemischt. Eine Verdrallung erfolgt durch einen inneren Hauptdrallkörper 56. Der Haupt-Brennstoff wird auch durch eine äußere Luftzufuhr 57 durchgeführt, atomisiert und gemischt, welche mittels eines äußeren Hauptdrallkörpers 58 verwirbelt wird. Die sich durch den Hauptbrenner ergebende Flamme umschließt die Zwischenzumischzone 45 und bildet eine magere Zone 39 aus.

Die Sekundärluft kann an unterschiedlichen Stellen (Sekundärluftzufuhr 51, 52 bzw. 53) zugeführt werden. Diese Zufuhr kann allein oder in Kombination erfolgen.

Die Fig. 11 zeigt eine axiale Längsschnittansicht sowie eine stirnseitige Ansicht eines Ausführungsbeispiels eines erfindungsgemäßen Brenners. Dabei ist dargestellt, dass die Sekundärluftausnehmungen 52 in Form runder Löcher ausgebildet sein können, welche an einem Flammenstabilisator vorgesehen sind.

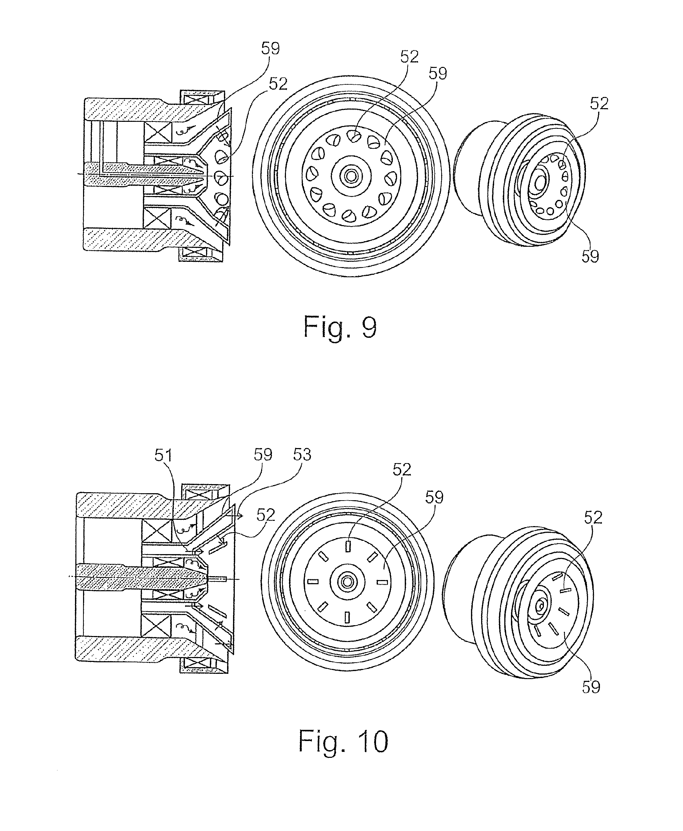

Bei dem Ausführungsbeispiel der Fig. 9 erfolgt die Zufuhr der Sekundärluft durch Röhren (chutes), die an dem Flammenstabilisator 59 ausgebildet sind. Die Zufuhr kann entweder in axialer oder in tangentialer Ausrichtung erfolgen, um eine Verwirbelung der Sekundärluft vorzunehmen. Es können zwischen 4 und 36 derartige Auslassröhren vorgesehen sein, diese können 0° und 60° zu der Brennerachse geneigt sein.

Die Fig. 11 zeigt eine weitere Ausgestaltungsvariante, bei welcher die Sekundärluftausnehmungen 52 in Form von Schlitzen ausgebildet sind. Es können zwischen 4 und 36 Schlitze vorgesehen sein, sie können zur Brennerachse einen Winkel zwischen 0° und 60° aufweisen, um die Luft zusätzlich zu verwirbeln.

Die Fig. 8 zeigt ein weiteres Ausführungsbeispiel mit V-förmigen Schlitzen 52. Auch diese können in einer Anzahl zwischen 4 und 36 vorgesehen sein. Auch hierbei ist es möglich, die V-förmigen Schlitze zur weiteren Verwirbelung der Luft zwischen 0° und 60° zur Brennerachse zu neigen.

Der oben beschriebene Brenner kann auch mit einem angeströmten Stützbrenner ausgebildet werden, so wie dies in Fig. 6 dargestellt ist. Die Zuführung des Stütz-Brennstoffs erfolgt durch einen Brennstoffauslass 47. Die Stützluft wird durch einen inneren Luftdurchlass 38 mit einem Drallelement 39 sowie einen äußeren Ringkanal 50 mit einem Drallelement 56 zugeführt.

Die Fig. 7 zeigt, dass sich erfindungsgemäß eine zweite Stützflammenstabilisierungszone Y, zusätzlich zu der Zone X, und der reichen Zone 33, ausbildet. Die Zone Y führt zu einer verbesserten Zusammenwirkung zwischen dem Stützbrenner und dem Hauptbrenner. Bei bestimmten Betriebsbedingungen kann die Hauptflamme auch in der Zone Y stabilisiert werden.

Erfindungsgemäß wird somit eine zusätzliche Zwischenzone geschaffen, durch welche die Verbrennung in der Brennkammer in kontrollierter und optimierter Weise erfolgen kann. Dies führt dazu, dass die Stützbrennerzone stabil arbeiten kann, ohne dass ein Verlöschen des Stützbrenners zu befürchten ist. Die Zwischenzone kann auch bei relativ hohen Lastbedingungen ohne Rußemissionen betrieben werden. Weiterhin verbessert die Zwischenzumischzone die Verbrennungseffizienz (Ausbrand) während eines gestuften Betriebs des Hauptbrenners. Dies führt zu einem minimalen Rückgang des Wirkungsgrades der Verbrennung während eines Übergangs von einem Betrieb des Stützbrenners und einem kombinierten Betrieb des Stützbrenners und des Hauptbrenners.

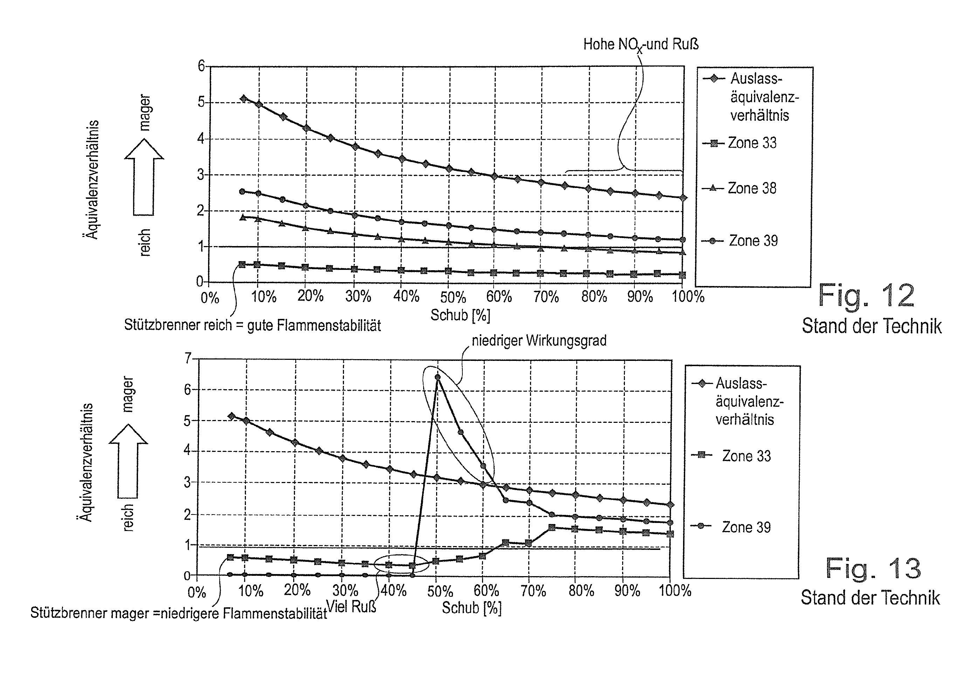

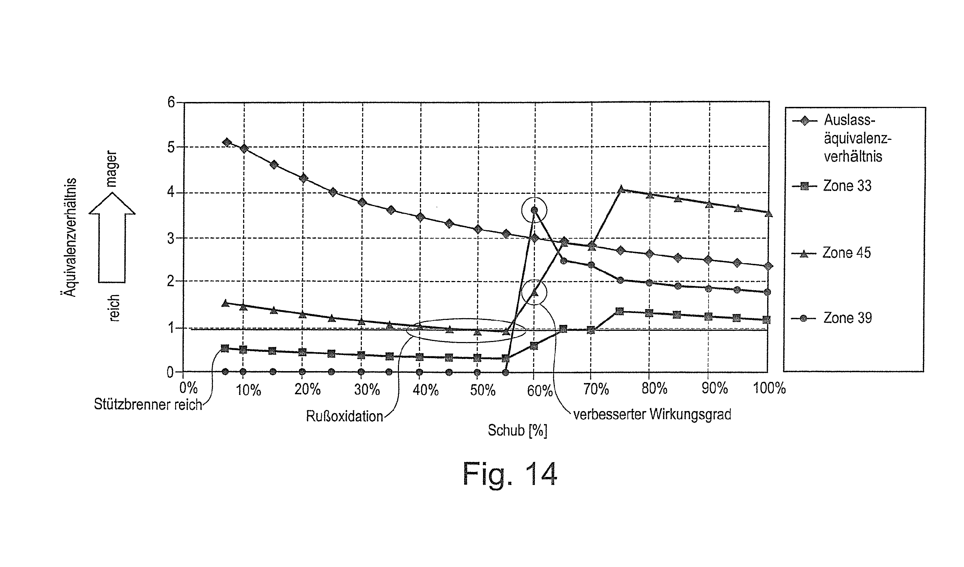

Im Folgenden wird die Erfindung hinsichtlich des erfindungsgemäßen Verfahrens anhand der Fig. 14 nochmals erläutert, wobei die Darstellungen der Fig. 12 und 13 den zugrundeliegenden Stand der Technik widerspiegeln.

Die Fig. 12 zeigt ein Diagramm, in welchem der Schub in Prozenten gegenüber dem Äquivalenzverhältnis zwischen Luft und Brennstoff aufgetragen ist. Bei einem Äquivalenzverhältnis von 1 ergibt sich ein stöchiometrisches Verhältnis, unterhalb 1 bis 0 ergibt sich eine reiche Verbrennung, während oberhalb 1 eine magere Verbrennung vorliegt. Diese Darstellungen sind auch in den Fig. 13 und 14 dargestellt.

Weiterhin beziehen sich die Angaben der Verbrennungszonen auf die Fig. 2 bis 5.

Die Fig. 12 zeigt eine Darstellung zum Stand der Technik, welche hohe Emissionswerte aufweist. Insbesondere ergeben sich bei hohem Schub bzw. großer Leistung hohe NOₓ-Werte sowie viel Ruß. Dabei erreichen die jeweiligen Äquivalenzverhältnisse der einzelnen Zonen, so wie dies in Fig. 12 für die Zonen 33, 38 und 39 angegeben ist, Werte, die nahe dem stöchiometrischen Wert ein Äquivalenzverhältnis von 1 oder ein reiches Äquivalenzverhältnis aufweisen. Demgegenüber ergibt sich für den Stützbrenner eine gute Flammenstabilität.

Um die Nachteile der verstärkten Rußbildung und der hohen NOₓ-Emissionen zu vermeiden, wurden Lösungen vorgeschlagen, welche in Fig. 13 dargestellt sind. Während sich die Fig. 12 insbesondere auf die Darstellung der Fig. 2 bezieht, basieren die in Fig. 13 gezeigten Werte insbesondere auf einer Ausgestaltung gemäß Fig. 3. Wie in Fig. 13 gezeigt, wird der Stützbrenner etwas magerer betrieben. Dies führt zu einer guten Verbrennung, gleichzeitig jedoch auch zur Erzeugung von viel Ruß. Zugleich ergibt sich durch den magereren Stützbrenner eine reduzierte Stabilität bei niedriger Last. Wie in Fig. 13 weiterhin dargestellt, ist der Brenner bei mittlerem Schub sehr mager eingestellt, so dass sich in diesem Teillastbereich oder Übergangsbereich insbesondere in der Zone 39 keine gute Verbrennung ergibt. Es liegt somit ein niedriger Wirkungsgrad vor. Dies führt zu einem verstärkten Brennstoffverbrauch bei einem Flugzeug.

Weiterhin ergibt sich, dass das Fehlen der Flammenzone 38 und die schlechte Interaktion zwischen der Mischluft 36 zu einer schlechten Oxidation von Ruß führt, wodurch sich hohe Rußemissionen ergeben.

Die Nachteile der in Fig. 13 dargestellten Funktionsweise können gemäß dem Stand der Technik dadurch gemindert werden, dass der Stützbrenner vergrößert wird, um eine größere Luftmenge durch den Stützbrenner durchzuleiten. Hierdurch könnte die Rußbildung verringert werden, dies hat jedoch den negativen Effekt, dass sich höhere NOₓ-Emissionen ergeben. Zudem führt ein magererer Betrieb des Stützbrenners zu einer geringeren Stabilität. Weiterhin könnte ein zweiter Stützbrennerkreislauf mit insgesamt drei Brennstoffkreisläufen eingeführt werden. Hierdurch wird jedoch die Komplexität des Gesamtsystems erhöht, weiterhin ergeben sich zusätzliche Kosten für Brennstoffeinspritzdüsen, Brennstoffsysteme und Steuersysteme.

Basierend auf den oben beschrieben Vorgehensweisen wurde erfindungsgemäß eine gänzlich andere Lösung geschaffen, welche in Zusammenhang mit der Fig. 14 erläutert wird.

Die erfindungsgemäße Lösung wurde oben stehend insbesondere in Zusammenhang mit der konstruktiven Lösung gemäß Fig. 4 beschrieben.

Erfindungsgemäß wird, wie oben stehend erläutert, eine Sekundärstützzone oder Zwischenzumischzone 45 ausgebildet, welche sich durch eine Umleitung von Luft/Brennstoff von der reichen Zone 33 ergibt. Weiterhin erfolgt eine Umleitung von Brennstoff und Luft aus der Gesamtluft-Strömung 44. Hierdurch wird eine zusätzliche Strömung 6 verwendet, so wie dies in Fig. 4 dargestellt ist.

Aus der erfindungsgemäßen Lösung ergeben sich die folgenden Vorteile:

Wie in den Fig. 4 und 5 dargestellt, führt die Hinzufügung der Sekundärstützzone/Zwischenzumischzone 45 zu einer Reduzierung der Rußemissionen, hervorgerufen durch eine verbesserte Oxidation des Rußes. Weiterhin ergibt sich ein verbesserter Verbrennungs-Wirkungsgrad durch die Reduzierung von sehr mageren Zonen. Die Zone des Haupt-Brenners ist weiterhin mager, die Zone 45 bildet jedoch eine Sekundärstützzone oder Zwischenzumischzone, welche näher zum stöchiometrischen Brennstoff-Luft-Verhältnis liegt. Weiterhin führt die Zone 45 zu einer Reduzierung der Ruß-Bildung. Die Zone 33 (Zone des Stützbrenners 42) kann mit einem reicheren Brennstoff-Luft-Gemisch betrieben werden, als bei den aus dem Stand der Technik bekannten Lösungen. Dies führt zu einer verbesserten Flammenstabilität.

Wie oben stehend erläutert, liegt der Kern der Erfindung in der zusätzlichen Einführung einer Sekundärstützzone oder Zwischenzumischzone 45. Dies führt dazu, dass der Stützbrenner mit einer konstanten Verbrennungszone betrieben werden kann und somit einen stabilen Betrieb gewährleistet, welcher ein Verlöschen der Flamme (flame-out) verhindert. Sowohl die Stützbrennerzone als auch die Sekundärstützzone/Zwischenzumischzone 45 können betrieben werden, ohne dass sich Probleme hinsichtlich der Ruß-Emissionen ergeben. Weiterhin verbessert die Sekundärstützzone/Zwischenzumischzone 45 die Effektivität der Verbrennung während eines abgestuften Betriebs des Hauptbrenners. Dies führt zu einer minimalen Verringerung der Verbrennungseffektivität während des Übergangs von dem Betrieb mit dem Stützbrenner und einem kombinierten Betrieb von Stützbrenner und Hauptbrenner.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 31: Brennkammerkopf
- 32: Brenner
- 33: reiche Zone
- 34, 35, 36, 37: Mischluft
- 38: Flammenzone
- 39: magere Zone
- 40: innere Brennkammerwand
- 41: äußere Brennkammerwand
- 42: Stützbrenner
- 43: Brennstoffzerstäuber
- 44: Gesamtluft
- 45: Sekundärstützzone/Zwischenzumischzone
- 46: Zusatzströmung
- 47: Brennstoffauslass
- 48: Luftdurchlass
- 49: Drallelement
- 50: Ringkanal
- 51, 52, 53: Sekundärluftzufuhr/Sekundärluftausnehmungen
- 54: konzentrische Hauptluftzufuhr
- 55: innere Luftzufuhr des Hauptbrenners
- 56: innerer Hauptdrallkörper
- 57: äußere Luftzufuhr des Hauptbrenners
- 58: äußerer Hauptdrallkörper
- 59: Flammenstabilisator
- 60: Stützluftzufuhr

## Patentansprüche

1. Verfahren zum Betrieb eines Magervormischbrenners einer Fluggasturbine, bei welchem Kraftstoff und Primärstützluft mittels eines zentrisch zur Brennerachse angeordneten Stützbrenners (42) zugeführt wird, bei welchem, den Stützbrenner (42) umgebend, Sekundärluft (51, 52, 53) zugeleitet wird und bei welchem mittels eines Hauptbrenners Kraftstoff und Luft zugeführt wird, **dadurch gekennzeichnet, dass** die Primärstützluft in einer Menge von 5 Vol.-% bis 10 Vol.-% der Gesamtluftmenge zugeführt wird, dass die Sekundärstützluft in einer Menge von 5 Vol.-% bis 20 Vol.-% zugeführt wird und dass über den Hauptbrenner im Teillastbereich und im Volllastbereich 35 Vol.-% bis 75 Vol.-% der Gesamtluftmenge zugeführt wird.

2. Verfahren nach Anspruch 1, **dadurch gekennzeichnet, dass** an den Stützbrenner anschließend eine reiche Zone (33) ausgebildet, dass die reiche Zone (33) von einer Zwischenzumischzone (45) umschlossen wird und dass die Zwischenzumischzone (45) umschlossen wird und dass die Zwischenzumischzone von einer mageren Zone (39) umschlossen wird.

3. Fluggasturbinen-Magervormischbrenner zur Durchführung des Verfahrens nach einem der Ansprüche 1 oder 2, **dadurch gekennzeichnet, dass** ein den Stützbrenner (42) konzentrisch umgebender Flammenstabilisator mit Sekundärluftausnehmungen (51 bis 53) vorgesehen ist.

4. Vormischbrenner nach Anspruch 3, **dadurch gekennzeichnet, dass** die Sekundärluftzufuhrausnehmungen (51 bis 53) in Form von gerade oder V-förmigen Schlitzen ausgebildet sind.

5. Vormischbrenner nach Anspruch 3, **dadurch gekennzeichnet, dass** die Sekundärluftzufuhrausnehmungen (51 bis 53) in Form von Röhren ausgebildet sind.
